# EUROPÄISCHE PATENTSCHRIFT

(11) **EP 3 078 099 B1**
(45) Veröffentlichungstag und Bekanntmachung des Hinweises auf die Patenterteilung: **08.11.2017**
(21) Anmeldenummer: 14799798.5
(22) Anmeldetag: 19.11.2014
(51) Int. Cl.: H02K 3/52, H02K 3/38, H02K 5/22

(54) **STATOR FÜR EINEN ELEKTRONISCH KOMMUTIERTEN GLEICHSTROMMOTOR**
STATOR FOR AN ELECTRONICALLY COMMUTATED DIRECT CURRENT MOTOR
STATOR POUR MOTEUR À COURANT CONTINU À COMMUTATION ÉLECTRONIQUE

(30) Priorität: 03.12.2013 DE 102013113363
(43) Veröffentlichungstag der Anmeldung: 12.10.2016
(73) Patentinhaber: Pierburg GmbH, 41460 Neuss (DE)
(72) Erfinder: NOWAK, Martin, 51379 Leverkusen (DE); BURGER, Andreas, 47803 Krefeld (DE); ROTHGANG, Stefan, 47495 Rheinberg (DE); FERNER, Hendrik, 41564 Kaarst (DE)
(74) Vertreter: Patentanwälte ter Smitten Eberlein-Van Hoof Rütten Partnerschaftsgesellschaft mbB
(86) Internationale Anmeldenummer: PCT/EP2014/075025
(87) Internationale Veröffentlichungsnummer: WO 2015/082220

(56) Entgegenhaltungen:
- EP-A1- 2 139 094
- EP-A2- 1 648 074
- EP-A2- 2 562 915
- DE-A1- 10 328 720
- DE-A1-102010 056 120
- US-B1- 6 208 058

## Beschreibung

Die Erfindung betrifft einen Stator für einen elektronisch kommutierten Gleichstrommotor mit einem Statorpaket mit Statorpolen, zwischen denen Nuten ausgebildet sind und auf denen Spulenwieklungen angeordnet sind, wobei die Wicklungsenden der Spulenwicklungen mit einer elektronischen Schaltung verbunden sind, über die die Kommutierungssignale den Spulenwicklungen zuführbar sind und wobei gleichphasige Spulenwicklungen über Verbindungskörper miteinander verbunden sind und ungleichphasige Spulenwicklungen über Isolationskörper elektrisch voneinander getrennt sind.

Elektronisch kommutierte Gleichstrommotoren mit derartigen Statoren dienen beispielsweise als Antriebseinheiten zur Verstellung von Regelklappen in Verbrennungsmotoren oder als Antriebe für Pumpen oder Verdichter und haben in den letzten Jahren die über Bürsten kommutierten Elektromotoren mehr und mehr verdrängt.

Es ist eine Vielzahl von elektronisch kommutierten Motoren sowie Ausführungen von deren Statoren und Rotoren bekannt, wobei in der Automobilindustrie vor allem Innenläufermotoren verwendet werden. Die auf der Antriebswelle aufgebrachten Rotoren sind mit Permanentmagneten bestückt, die entsprechend des magnetischen Feldes des Stators angezogen werden, um die Drehung des Stators zu erzeugen. Die Statoren weisen radial nach innen weisende Polzähne auf, auf denen die Statorwicklungen aufgewickelt sind oder auf die die fertig gewickelten Spulen aufgesetzt werden. Zumeist bestehen sowohl die Rotoren als auch die Statoren aus gestanzten, übereinander liegenden Blechlamellen. Neben den unterschiedlichen bekannten Ausführungsformen der Statoren und Rotoren sind auch verschiedene Kommutierungsschaltungen und Lagerückmeldungen zur Sicherstellung eines korrekten Anlaufs des Motors bekannt. Die Kommutierung erfolgt durch Bestromung der Spulen über die Wicklungsenden, welche entsprechend zur Steuereinheit und somit zur Stromversorgung geschaltet werden müssen. Dabei können gleichphasige Wicklungsenden über eine gemeinsame Versorgungsleitung versorgt werden, so dass eine elektrische Verbindungsschiene zwischen diesen Wicklungsenden notwendig ist. Andererseits ist es notwendig, die Spulen und Kontaktleitungen unterschiedlicher Phasen gegeneinander zu isolieren.

Des Weiteren sind bei der Verwendung dieser Motoren zum Antrieb von Pumpen oder Verdichtern in Kraftfahrzeugen aufgrund der niedrigen Bordspannung und einem hohen Leistungsbedarf, große Ströme erforderlich. Um eine zu große Aufheizung mit folgendem Defekt der Motorwicklungen zu verhindern, sind daher große Leitungsquerschnitte für die Wicklungen erforderlich. Anderseits sollte der Bauraum derartiger Motoren möglichst gering gehalten werden und eine ausreichende Isolierung der Spulen zueinander sichergestellt werden.

Um bei einem solchen elektronisch kommutierten Gleichstrommotor mit großen Wicklungsquerschnitten eine Kontaktierung der Wicklungsenden sicher zu stellen und eine Isolierung zwischen den Spulen zu schaffen, wird in der US 2008/0136274 A1 vorgeschlagen, dass die in Umfangsrichtung beabstandet voneinander angeordneten U-förmigen Wicklungen jeweils zwei Wicklungsenden aufweisen, die axial aus dem Stator herausstehen und dort über Verbinderplatten zur Bildung einer Spule miteinander verbunden werden. Jeder dieser Verbinderplatten besteht aus einem Trägerkörper aus einem Isoliermaterial sowie aus elektrischen Verbindern, die auf dem Trägerkörper befestigt sind. Mehrere solcher Verbinderplatten werden aufeinander gelegt und durch Schweißen mit den entsprechenden Wicklungsenden verbunden. Hierzu sind an den Enden der elektrischen Verbinder entsprechende Ausformungen ausgebildet, in die die Wicklungsenden beim Auflegen der Verbinderplatten greifen. Es wird jedoch nicht offenbart, wie die einzelnen Spulen mit der Stromversorgung verbunden werden können und dabei sichergestellt wird, dass eine korrekte gewünschte Verschaltung entsteht.

Des Weiteren ist aus der EP 1 648 074 A2 ein Gleichstrommotor mit einem Stator bekannt, dessen gleichphasige Wicklungen über Anschlussringe miteinander verbunden sind. Die Anschlussringe sind beabstandet zueinander koaxial zum Stator angeordnet und weisen am radialen Außenumfang Vorsprünge auf, die in entsprechende Ausnehmungen eines Gehäuseabschnitts des Elektromotors greifen und am axialen Ende dieser Ausnehmungen aufliegen. Eine Festlegung der Wicklungsenden zu den Anschlussringen oder eine zusätzliche Befestigung der Anschlussringe im Bereich ihres Innenumfangs erfolgt nicht.

Zusätzlich ist aus der DE 10 2010 056 120 A1 eine Verschaltungseinrichtung eines Elektromotors bekannt, der einen elektrischen Baugruppenträger aufweist, an dem eine Mehrzahl von Kontaktträgern zur Kontaktierung der Erregerwicklungen vorgesehen ist. Zwischen den Kontaktträgern werden Isolationskörper angeordnet.

Die EP 2 562 915 A2 offenbart einen Elektromotor mit Verbindungskörpern und zwischenliegenden Isolationskörpern, die auf ein Trägerteil gelegt werden, welches auch zur elektrischen Kontaktierung des Elektromotors dient. Das Trägerteil weist Seitenwände auf und weist eine Polygonform auf, an welche die Verbindungskörper und Isolationskörper angepasst sind. Entsprechend ist es möglich, die Verbindungskörper in unterschiedlichen Winkellagen auf dem Trägerteil zu platzieren. Eine Führung der Wicklungsenden erfolgt nicht.

Zusätzlich ist aus der DE 103 28 720 A1 ein Elektromotor bekannt, dessen Leiterbahnen aufrecht zwischen Halterungen eines Trägerteils geklemmt werden. Korrespondierende Konturen zur Führung der Verbindungskörper werden nicht offenbart.

Es stellt sich daher die Aufgabe, einen Stator für einen elektronisch kommutierten Gleichstrommotor bereit zu stellen, mit dem sowohl eine korrekte Verbindung gleichphasiger Wicklungsenden sichergestellt wird als auch deren elektrische Kontaktierung zur Steuereinheit beziehungsweise zur Stromversorgung. Der Montageaufwand soll dabei möglichst gering gehalten werden. Insbesondere soll sichergestellt werden, dass korrekte Wicklungsenden miteinander verbunden werden, wobei Fehlmontagen ausgeschlossen werden sollen. Des Weiteren soll eine möglichst einfache Anpassung eines solchen Motors an geänderte Kundendaten bezüglich der notwendigen Drehzahl, Stromstärke und daraus folgend der benötigten Wicklungsquerschnitte möglich sein.

Diese Aufgabe wird durch einen Stator für einen elektronisch kommutierten Gleichstrommotor mit den Merkmalen des Hauptanspruchs 1 gelöst.

Dadurch, dass die Wicklungsenden an einem gemeinsamen axialen Ende des Stators über das Statorpaket hinaus in einen Führungskörper ragen, der eine sich senkrecht zur Mittelachse des Statorpakets erstreckende Wand aufweist, auf deren zum Statorpaket gegenüberliegenden axialen Fläche die Isolationskörper und die Verbindungskörper aufliegen, wobei an den Verbindungskörpern Konturen ausgebildet sind, die derart in korrespondierende Konturen greifen, die am Führungskörper ausgebildet sind, dass die Winkellage der Verbindungskörper zum Führungskörper und damit zum Stator eindeutig festgelegt ist und an der sich senkrecht zur Mittelachse des Statorpakets erstreckenden Wand des Führungskörpers Ausnehmungen ausgebildet sind, in denen die Wicklungsenden aufgenommen sind, wird eine falsche Kontaktierung ausgeschlossen. Zusätzlich wird die Lage der Wicklungsenden zum Führungskörper sowie zu den Verbindungskörpern und Isolationskörpern festgelegt. Die Montage wird erleichtert und der benötigte Bauraum gering gehalten. Des Weiteren können mit einem derartigen Stator Parallel- und Reihenschaltungen verwirklicht werden und so ein Motor gleicher Baugröße einfach an geänderte Drehzahlen angepasst werden. Durch die Ausnehmungen, in denen die Wicklungsenden aufgenommen sind, sind diese zusätzlich auch zum Führungskörper vorfixlert und somit zur Befestigung an den Verbindungskörpern ausgerichtet.

Vorzugsweise sind die korrespondierenden Konturen des Führungskörpers als Ausformungen am Innenumfang einer sich axial erstreckenden, den Führungskörper radial begrenzenden Außenwand ausgebildet. Diese dient als radiale Begrenzung und für die Isolations- und Verbindungskörper und legt auch deren Winkellage auf dem Führungskörper eindeutig fest.

Vorteilhafterweise sind die korrespondierenden Konturen des Führungskörpers als Vorsprünge ausgebildet, die sich von der sich senkrecht zur Mittelachse des Statorpakets erstreckenden Wand axial vom Stator abgewandt erstrecken. Eine solche Ausführung kann als zusätzliche oder einzelne Lagefixierung der Körper in umfangsrichtung und in radialer Richtung dienen.

In einer vorteilhaften Ausgestaltung der Erfindung sind auf der sich senkrecht zur Mittelachse des Statorpakets erstreckenden Wand abwechselnd Verbindungskörper und Isolationskörper angeordnet, wodurch ein leitender Kontakt zwischen den Verbindungskörpern zuverlässig vermieden wird.

Besonders bevorzugt ist es, wenn an den Verbindungskörpern Durchtrittsfenster ausgebildet sind, durch die die Wicklungsenden der zu kontaktierenden Spulenwicklungen ragen. Durch das Aufstecken findet somit eine Lagefestlegung der vorfixierten Wicklungsenden statt, wodurch eine folgende elektrische Befestigung einfach durchführbar ist.

In einer hierzu weiterführenden Ausbildung sind an den Verbindungskörpern Zungen ausgebildet, an denen die zu kontaktierenden Wicklungsenden elektrisch leitend befestigt sind. Durch die Zungen besteht die Möglichkeit eines großflächigen Kontaktes zur Befestigung der Wicklungsenden, so dass eine hohe Lebensdauer der Befestigung sichergestellt wird.

In einer vorteilhaften Weiterbildung sind die Durchtrittsfenster unmittelbar radial außerhalb der Zungen ausgebildet. Entsprechend kann die Befestigung ohne Umformung der Wicklungsenden erfolgen, da diese bereits aufgrund ihrer Befestigung in den Durchtrittsfenstern unmittelbar an den Zungen anliegen.

Vorzugweise erfolgt die Befestigung der Wicklungsenden mit den Zungen der Verbindungskörper durch eine Löt- oder Schweißverbindung, die eine langlebige Befestigung auch im Falle auftretender Erschütterungen sicherstellt.

In einer Weiterbildung der Erfindung sind auch an den Isolationskörpern Konturen ausgebildet, die in korrespondierende Konturen greifen, die am Führungskörper ausgebildet sind, wodurch auch eine korrekte Ausrichtung der Isolationskörper zum Führungskörper und damit zu den Verbindungskörpern erreicht wird.

Eine weitere Vereinfachung der elektrischen Montage ergibt sich, wenn sich von jedem Verbindungskörper axial Anschlusskontakte in zum Statorpaket entgegengesetzter Richtung erstecken, über die die Spulenwicklungen über die Wicklungsenden mit der elektronischen Schaltung verbunden sind. So wird auch eine eindeutige Positionierung der Anschlusskontakte zur Herstellung der Verbindung mit der Steuereinheit hergestellt.

Um eine vollständige Fixierung der Verbindungskörper, der Isolationskörper und der Anschlusskontakte sicher zu stellen, ist auf dem Führungskörper, den Isolationskörpern und den Verbindungskörpern ein Abschlussring angeordnet, der Durchgangsöffnungen aufweist, durch die die Anschlusskontakte ragen.

Es wird somit ein Stator für einen elektronisch kommutierten Gleichstrommotor geschaffen, der bei geringem Bauraumbedarf einfach zu montieren und toleranzunempfindlich elektrisch anzuschließen ist, wobei sowohl eine Parallel- als auch Reihenverschaltung der Spulen verwirklicht werden kann, ohne die zur Steuereinheit weisenden Kontaktanschlüsse in ihrer Lage ändern zu müssen. So ist eine Anpassung der Leitungsquerschnitte bei sich ändernden Drehzahlen mit geringen Änderungen des Stators realisierbar.

Zwei Ausführungsbeispiele eines erfindungsgemäßen Stators sind in den Figuren dargestellt und werden nachfolgend beschrieben.
Figur 1 zeigt eine perspektivische Ansicht eines erfindungsgemäßen Stators mit parallel geschalteten Spulen in gesprengter Darstellung.
Figur 2 zeigt eine perspektivische Ansicht eines alternativen erfindungsgemäßen Stators mit seriell geschalteten Spulen in gesprengter Darstellung.
Figur 3 zeigt eine perspektivische Ansicht eines Führungskörpers der erfindungsgemäßen Statoren der Figur 1 oder 2.
Figur 4 zeigt eine perspektivische Ansicht eines erfindungsgemäßen Stators gemäß der Figuren 1 oder 2 in zusammengebautem Zustand.

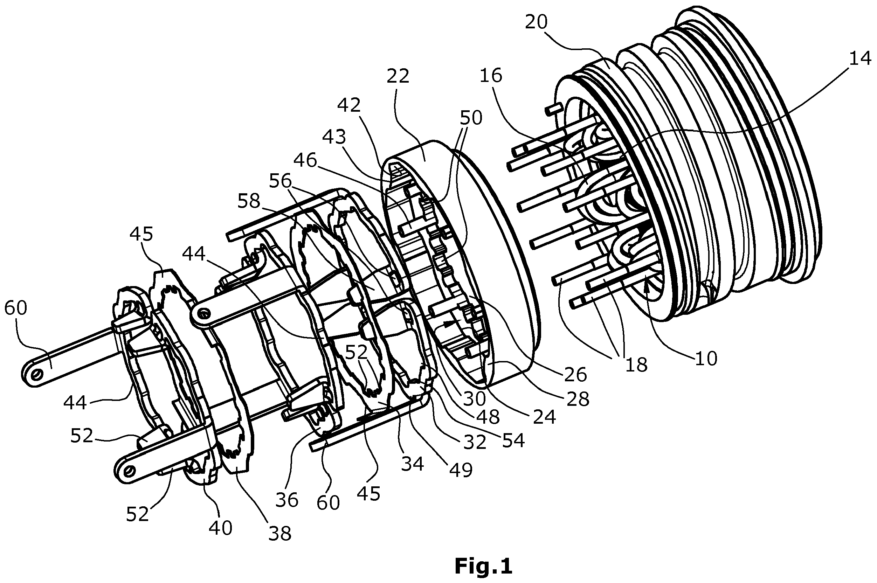

In den Figuren 1, 2 und 4 sind Statoren von als Innenläufer ausgeführten elektronisch kommutierten dreiphasigen Gleichstrommotoren mit breitem Wicklungsquerschnitt dargestellt. Der hierzu passende Rotor wird entsprechend ins Innere des Stators eingesetzt und auf seiner Welle beispielsweise ein Verdichterrad aufgesetzt.

Der Stator besteht aus einem Statorpaket 10, welches üblicherweise aus übereinander gestapelten Blechlamellen aufgebaut ist. Das Statorpaket 10 weist in diesem Ausführungsbeispiel sechs radial nach innen weisende Statorpole 12 auf, die durch Nuten 14 voneinander beabstandet sind. Jeder Statorpol 12 ist mit einer Spulenwicklung 16 bestückt, die um den Statorpol 12 gewickelt ist und einen aufgrund des hohen notwendigen Stromflusses einen großen Querschnitt aufweist. Jede Spulenwicklung 16 weist zwei Wicklungsenden 18 auf, die an einem gemeinsamen axialen Ende des Stators über das Statorpaket 10 hinausragen, dessen Blechlamellen von einem Statorgehäuseteil 20 radial umgeben sind. Das axiale Ende, aus dem die Wicklungsenden 18 ragen, ist offen ausgebildet.

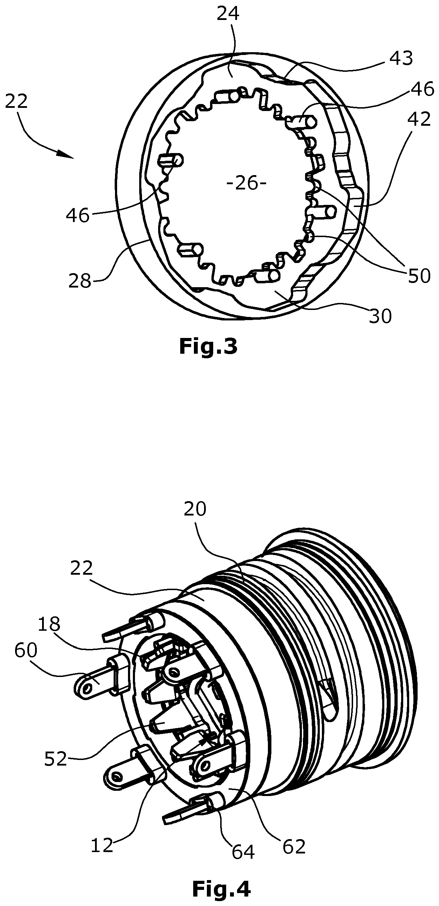

Auf das Statorgehäuseteil 20 wird erfindungsgemäß ein aus isolierendem Material hergestellter, in Figur 3 dargestellter Führungskörper 22 aufgesetzt. Dieser Führungskörper 22 besteht aus einer sich senkrecht zur Mittelachse des Statorpakets 10 erstreckenden und axial jenseits des Statorpakets 10 angeordneten Wand 24, welche eine zentrale Öffnung 26 aufweist, sowie einer sich axial erstreckenden ringförmigen Außenwand 28, die den Außenumfang des Führungskörpers 22 bildet und sich von der Wand 24 aus in zum Statorpaket 10 entgegengesetzter Richtung erstreckt.

Auf eine vom Statorpaket 10 weg weisende Fläche 30 der sich senkrecht zur Mittelachse des Statorpakets erstreckenden Wand 24 wird zunächst Verbindungskörper 32 aufgelegt. Auf diesen folgt ein Isolationskörper 34, der axial auf den ersten Verbindungskörper 32 gelegt wird. Darauf wird ein zweiter Verbindungskörper 36, ein zweiter Isolationskörper 38 sowie ein dritter Verbindungskörper 40 aufgelegt.

Die Außenwand 28 des Führungskörpers 22 weist an ihrem Innenumfang Ausformungen 42, 43 auf, die zu Konturen 44 am Außenumfang der Verbindungskörper 32, 36, 40 und Konturen 45 am Außenumfang der Isolationskörper 34, 38 korrespondieren. Entsprechend wird deren Winkellage zum Führungskörper 22 festgelegt. Zusätzlich wird diese radiale Winkellage durch in diesem Ausführungsbeispiel stiftförmig ausgeführte Vorsprünge 46 festgelegt, die sich vom Innenumfang der sich senkrecht zur Mittelachse des Statorpakets 10 erstreckenden Wand 24 axial in einer zum Statorpaket 10 abgewandten Richtung erstrecken und in entsprechend geformte Ausnehmungen 48, 49 am Innenumfang der Verbindungs- und Isolationskörper 32, 34, 36, 38, 40 ragen. Die Ausformungen 42 und Vorsprünge 46 dienen somit als die Winkellage der Verbindungskörper 32, 36, 40 und Isolationskörper 34, 38 festlegende Konturen des Führungskörpers 22.

Des Weiteren sind am Innenumfang der sich senkrecht zur Mittelachse des Statorpakets 10 erstreckenden Wand 24 Ausnehmungen 50 ausgebildet, in die die Wicklungsenden 18 ragen, welche somit ebenfalls in ihrer Winkellage fixiert werden. Entsprechende Ausnehmungen 52 sind auch an den Isolationskörpern 34, 38 ausgebildet. Die Verbindungskörper 32, 36, 40 weisen einerseits ebenfalls am Innenumfang ausgebildete Ausnehmungen 54 auf, durch die die Wicklungsenden 18 ragen, ohne die Verbindungskörper 32, 36, 40 zu berühren. Diese Ausnehmungen 54 dienen zur Durchführung der nicht zu kontaktierenden Wicklungsenden 18. Zusätzlich sind an jedem Verbindungskörper 32, 36, 40 vier nach radial außen geschlossene Durchtrittsfenster 56 ausgebildet, durch welche die Wicklungsenden 18 der beiden über den jeweiligen Verbindungskörper 32, 36, 40 elektrisch zu verbindenden gegenüberliegenden Spulenwicklungen 16 ragen. Unmittelbar radial innerhalb dieser Durchtrittsfenster 56 sind jeweils sich axial erstreckende und vom Führungskörper 22 weg weisende Zungen 58 ausgebildet, an denen die Wicklungsenden 18 zur elektrischen Kontaktierung mit den Verbindungskörpern 32, 36, 40 festgeschweißt werden. Selbstverständlich sind die Durchtrittsfenster 56 der verschiedenen Verbindungskörper 32, 36, 40 jeweils um 60° versetzt zueinander angeordnet, so dass jeder Verbindungskörper 32, 36, 40 jeweils ein anderes gegenüberliegendes Spulenpaar verbindet.

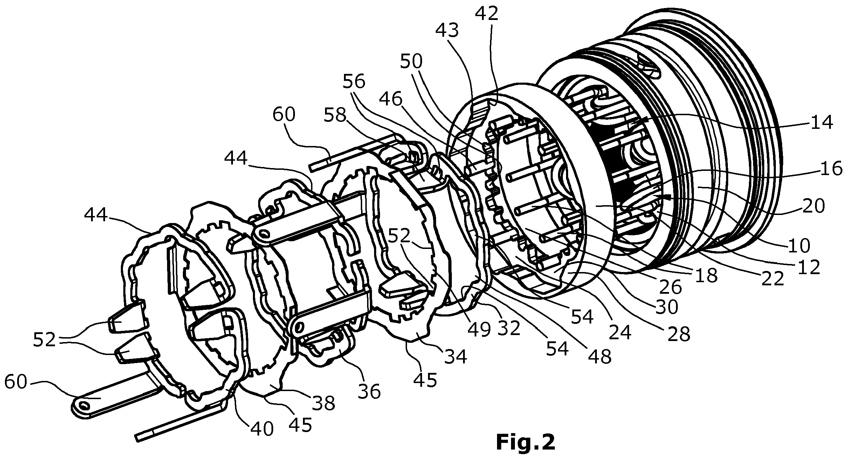

Vom radialen Außenumfang der Verbindungskörper 32, 36, 40 aus, erstrecken sich zusätzlich pro Verbindungskörper 32, 36, 40 zwei Anschlusskontakte 60 in axialer Richtung. Während bei der in Figur 1 dargestellten Parallelschaltung diese Anschlusskontakte 60 zu den Zungen 58 jeweils um etwa 90° versetzt angeordnet sind und somit zueinander radial gegenüberliegen, sind diese Anschlusskontakte 60 bei der in Figur 2 dargestellten Reihenschaltung lediglich um etwa 60° zueinander versetzt, was die jeweils weiterführende Kontaktierung in der geplanten Weise vereinfacht.

In den vorliegenden Ausführungsbeispielen sind die Verbindungs- und Isolationskörper 32, 34, 36, 38, 40 sowie deren Konturen 44, 48 sowie die Konturen 42, 50 und Vorsprünge 46 des Führungskörpers 22 derart ausgebildet, dass die Verbindungs- und Isolationskörper 32, 34, 36, 38, 40 gleichartig ausgeführt sind und somit um 60° versetzt ebenfalls eingesetzt werden können. Dies ermöglicht eine kostengünstigere Herstellung.

Zur Vervollständigung des Statoraufbau wird auf den Führungskörper 22 und damit auch auf die Verbindungs- und Isolationskörper 32, 34, 36, 38, 40 axial ein Abschlussring 62 aufgesetzt, an dem sechs Durchgangsöffnungen 64 ausgebildet sind, durch die die Anschlusskontakte 60 aus dem Stator ragen. Diese Anschlusskontakte 60 ragen in eine Elektronikkammer zu einer Steuereinheit. Über die die Stromversorgung und elektronische Kontaktierung des Stators in gewünschter Weise hergestellt wird.

Der beschriebene Stator zeichnet sich durch seine sehr einfache Montage durch gute Zugänglichkeit aus, wobei Reihen- und Parallelschaltung der Spulen durch einfachen Austausch der Verbindungskörper realisiert werden können, ohne die Durchkontaktierung zur Elektronik verändern zu müssen. Fehler bei der Montage werden vermieden, da kein funktionsrelevantes Vertauschen der Bauteile möglich ist. Es müssen bei der Fertigung der Einzelteile keine engen Toleranzen beibehalten werden, da die Bauteile zueinander geführt werden.

Es sollte deutlich sein, dass der Schutzbereich nicht auf das beschriebene Ausführungsbeispiel begrenzt ist. So können selbstverständlich auch mehr oder weniger Phasen aufweisende Motoren verwendet werden, wobei die Anzahl der Isolations- und Verbindungskörper sowie der vorhandenen Konturen entsprechend anzupassen ist. Auch ist es möglich, für jeden Verbindungs- oder Isolationskörper eigene Konturen an sich und am Führungskörper auszubilden und somit die Reihenfolge und genaue nicht verdrehbare Winkellage der Körper festzulegen, ohne den Schutzbereich des Hauptanspruchs zu verlassen. Es ist ebenfalls möglich, die Isolationskörper als Kunststoffschichten auszubilden, wenn die Verbindungskörper zuvor umspritzt werden.

## Patentansprüche

1. Stator für einen elektronisch kommutierten Gleichstrommotor mit einem Statorpaket (10) mit Statorpolen (12),
zwischen denen Nuten (14) ausgebildet sind und auf denen Spulenwicklungen (16) angeordnet sind,
wobei Wicklungsenden (18) der Spulenwicklungen (16) mit einer elektronischen Schaltung verbunden sind, über die die Kommutierungssignale den Spulenwicklungen (16) zuführbar sind, wobei gleichphasige Spulenwicklungen (16) über Verbindungskörper (32, 36, 40) miteinander verbunden sind, wobei die Wicklungsenden (18) an einem gemeinsamen axialen Ende des Stators über das Statorpaket (10) hinaus in einen Führungskörper (22) ragen, wobei an den Verbindungskörpern (32,36,40) Konturen (44,48) ausgebildet sind, die derart in korrespondierende Konturen (43,46) greifen, die am Führungskörper (22) ausgebildet sind,
dass die Winkellage der Verbindungskörper (32,36,40) zum Führungskörper (22) und damit zum Stator eindeutig festgelegt ist, **dadurch gekennzeichnet, dass** ungleichphasige Spulenwicklungen (16) über Isolationskörper voneinander getrennt sind, wobei der Führungskörper (22) eine sich senkrecht zur Mittelachse des Statorpakets (10) erstreckende Wand (24) aufweist, auf deren zum Statorpaket (10) gegenüberliegenden axialen Fläche (30) die Isolationskörper (34, 38) und die Verbindungskörper (32, 36, 40) aufliegen, wobei an der sich senkrecht zur Mittelachse des Statorpakets (10) erstreckenden Wand (24) des Führungskörpers (22) Ausnehmungen (50) ausgebildet sind, in denen die Wicklungsenden (18) aufgenommen sind.

2. Stator für einen elektronisch kommutierten Gleichstrommotor nach Anspruch 1,
**dadurch gekennzeichnet, dass**
die korrespondierenden Konturen des Führungskörpers (22) als Ausformungen (43) am Innenumfang einer sich axial erstreckenden, den Führungskörper (22) radial begrenzenden Außenwand (28) ausgebildet sind.

3. Stator für einen elektronisch kommutierten Gleichstrommotor nach einem der Ansprüche 1 oder 2,
**dadurch gekennzeichnet, dass**
die korrespondierenden Konturen des Führungskörpers (22) als Vorsprünge (46) ausgebildet sind, die sich von der sich senkrecht zur Mittelachse des Statorpakets (10) erstreckenden Wand (24) axial vom Statorpaket (10) abgewandt erstrecken.

4. Stator für einen elektronisch kommutierten Gleichstrommotor nach einem der vorhergehenden Ansprüche,
**dadurch gekennzeichnet, dass**
auf der sich senkrecht zur Mittelachse des Statorpakets (10) erstreckenden Wand (24) abwechselnd Verbindungskörper (32, 36, 40) und Isolationskörper (34, 38) angeordnet sind.

5. Stator für einen elektronisch kommutierten Gleichstrommotor nach einem der vorhergehenden Ansprüche,
**dadurch gekennzeichnet, dass**
an den Verbindungskörpern (32, 36, 40) Durchtrittsfenster (56) ausgebildet sind, durch die die Wicklungsenden (18) der zu kontaktierenden Spulenwicklungen (16) ragen.

6. Stator für einen elektronisch kommutierten Gleichstrommotor nach einem der vorhergehenden Ansprüche,
**dadurch gekennzeichnet, dass**
an den Verbindungskörpern (32, 36, 40) Zungen (58) ausgebildet sind, an denen die zu kontaktierenden Wicklungsenden (18) elektrisch leitend befestigt sind.

7. Stator für einen elektronisch kommutierten Gleichstrommotor nach den Ansprüchen 5 und 6,
**dadurch gekennzeichnet, das**
die Durchtrittsfenster (56) unmittelbar radial außerhalb der Zungen (58) ausgebildet sind.

8. Stator für einen elektronisch kommutierten Gleichstrommotor nach Anspruch 6 oder 7,
**dadurch gekennzeichnet, dass**
die Befestigung der Wicklungsenden (18) mit den Zungen (58) der Verbindungskörper (32, 36, 40) durch eine Löt- oder Schweißverbindung hergestellt ist.

9. Stator für einen elektronisch kommutierten Gleichstrommotor nach einem der vorhergehenden Ansprüchen,
**dadurch gekennzeichnet, dass**
an den Isolationskörpern (34, 38) Konturen (44, 48) ausgebildet sind, die in korrespondierende Konturen (42, 46) greifen, die am Führungskörper (22) ausgebildet sind.

10. Stator für einen elektronisch kommutierten Gleichstrommotor nach einem der vorhergehenden Ansprüche,
**dadurch gekennzeichnet, dass**
sich von jedem Verbindungskörper (32, 36, 40) axial Anschlusskontakte (60) In zum Statorpaket (10) entgegengesetzter Richtung erstrecken, über die die Spulenwicklungen (16) über die Wicklungsenden (18) mit der elektronischen Schaltung verbunden sind.

11. Stator für einen elektronisch kommutierten Gleichstrommotor nach Anspruch 10,
**dadurch gekennzeichnet, dass**
auf dem Führungskörper (22), den Isolationskörpern (34, 38) und den Verbindungskörpern (32, 36, 40) ein Abschlussring (62) angeordnet ist, der Durchgangsöffnungen (64) aufweist, durch die die Anschlusskontakte (60) ragen.

## Claims

1. A stator for an electronically commutated direct current motor having a stator stack (10) with stator poles (12),
between which grooves (14) are defined and on which coil windings (16) are arranged,
wherein winding ends (18) of said coil windings (16) are connected with an electronic circuit via which the commutating signals are adapted to be fed to said coil windings (16),
wherein cophasal coil windings (16) are connected with each other via connecting bodies (32, 36, 40), wherein said winding ends (18) extend at a common axial end of the stator beyond said stator stack (10) and into a guiding body (22), wherein at said connecting bodies (32, 36, 40) contours (44, 48) are defined which engage with corresponding contours (43, 46) defined at the guiding body (22) such that the angular position of the connecting bodies (32, 36, 40) relative to the guiding body (22) and thus to the stator is clearly defined,
**characterized in that**
non-cophasal coil windings (16) are electrically isolated from each other via isolating bodies, wherein the guiding body (22) comprises a wall (24) extending perpendicularly to a central axis of said stator stack (10), upon whose axial surface (30) opposite to said stator stack (10) said isolating bodies (34, 38) and said connecting bodies (32, 36, 40) rest, wherein at the wall (24) of the guiding body (22) extending perpendicularly to the central axis of the stator stack (10) recesses (50) are defined in which the winding ends (18) are accommodated.

2. The stator for an electronically commutated direct current motor according to claim 1,
**characterized in that**
the corresponding contours of the guiding body (22) are configured as profiles (43) at an inner circumference of an axially extending outer wall (28) radially delimiting the guiding body (22).

3. The stator for an electronically commutated direct current motor according to any one of claims 1 or 2,
**characterized in that**
the corresponding contours of the guiding body (22) are configured as projections (46) which axially extend from the wall (24) extending perpendicularly to the central axis of the stator stack (10) in a manner facing away from said stator stack (10).

4. The stator for an electronically commutated direct current motor according to any one of the preceding claims,
**characterized in that**
at the wall (24) extending perpendicularly to the central axis of the stator stack (10) connecting bodies (32, 36, 40) and isolating bodies (34, 38) are alternately arranged.

5. The stator for an electronically commutated direct current motor according to any one of the preceding claims,
**characterized in that**
at the connecting bodies (32, 36, 40) through-going windows (56) are defined through which the winding ends (18) of the coil windings (16) to be contacted extend.

6. The stator for an electronically commutated direct current motor according to any one of the preceding claims,
**characterized in that**
at the connecting bodies (32, 36, 40) tongues (58) are defined to which the winding ends (18) to be contacted are fastened in an electrically conducting manner.

7. The stator for an electronically commutated direct current motor according to any one of claims 5 or 6,
**characterized in that**
the through-going windows (56) are defined immediately radially outside the tongues (58).

8. The stator for an electronically commutated direct current motor according to any one of claims 6 or 7,
**characterized in that**
fastening of the winding ends (18) to the tongues (58) of the connecting bodies (32, 36, 40) is realized by a soldered or welded joint.

9. The stator for an electronically commutated direct current motor according to any one of the preceding claims,
**characterized in that**
at the isolating bodies (34, 38) contours (44, 48) are defined which engage with corresponding contours (42, 46) which are defined at the guiding body (22).

10. The stator for an electronically commutated direct current motor according to any one of the preceding claims,
**characterized in that**
from each connecting body (32, 36, 40) connecting contacts (60) axially extend in a direction opposite to the stator stack (10), via which the coil windings (16) are connected with the electronic circuit via the winding ends (18).

11. The stator for an electronically commutated direct current motor according to claim 10,
**characterized in that**
at the guiding body (22), the isolating bodies (34, 38) and the connecting bodies (32, 36, 40) a terminating ring (62) is arranged which comprises through-going openings (64) through which the connecting contacts (60) extend.

## Revendications

1. Stator pour moteur à courant continu à commutation électronique comprenant un paquet de stator (10) avec des pôles de stator (12),
entre lesquels sont formées des rainures (14) et sur lesquels sont enroulées des enroulements de bobine (16),
des extrémités des enroulements (18) des bobine (16) des étant reliées à un circuit électronique par lequel les signaux de commutation peuvent être fournis aux enroulements de bobine (16),
des enroulements de bobine (16) en phase étant reliés l'un à l'autre par des corps de connexion (32, 36, 40), les extrémités des enroulements (18) s'étendant, à une extrémité axiale commune du stator, au-delà du paquet de stator (10) dans un corps de guidage (22), les corps de connexion (32, 36, 40) étant pourvus de contours (44, 48) engageant des contours (43, 46) correspondants formés dans le corps de guidage (22), de sorte que la position angulaire des corps de connexion (32, 36, 40) par rapport au corps de guidage (22), et ainsi par rapport au stator, est clairement définie,
**caractérisé en ce que**
des enroulements de bobine (16) déphasés sont séparés l'un de l'autre par des corps isolants, ledit corps de guidage (22) ayant une paroi (24) s'étendant perpendiculairement par rapport à l'axe central du paquet de stator (10), paroi sur la face axiale (30) de laquelle, opposée au paquet de stator (10), restent les corps isolants (34, 38) et les corps de connexion (32, 36, 40), la paroi (24) du corps de guidage (22) s'étendant perpendiculairement par rapport à l'axe central du paquet de stator (10) étant pourvue des évidements (50) dans lesquels les extrémités des enroulements (18) sont accommodées.

2. Stator pour moteur à courant continu à commutation électronique selon la revendication 1, **caractérisé en ce que** les contours (43, 46) correspondants dans le corps de guidage (22) sont réalisés en forme de structures (43) sur la circonférence intérieure d'une paroi extérieure (28) s'étendant dans la direction axiale et délimitant le corps de guidage (22) dans la direction radiale.

3. Stator pour moteur à courant continu à commutation électronique selon l'une des revendications 1 ou 2, **caractérisé en ce que** les contours (43, 46) correspondants dans le corps de guidage (22) sont réalisés en forme de saillies (46) qui s'étendent de la paroi (24), qui s'étend perpendiculairement par rapport à l'axe central du paquet de stator (10), dans la direction axialement opposée au paquet de stator (10).

4. Stator pour moteur à courant continu à commutation électronique selon l'une quelconque des revendications précédentes, **caractérisé en ce que** des corps de connexion (32, 36, 40) et des corps isolants (34, 38) sont disposés en alternance sur la paroi (24), qui s'étend perpendiculairement par rapport à l'axe central du paquet de stator (10).

5. Stator pour moteur à courant continu à commutation électronique selon l'une quelconque des revendications précédentes, **caractérisé en ce que** les corps de connexion (32, 36, 40) sont pourvus de fenêtres de passage (56) à travers lesquelles saillent les extrémités des enroulements (18) des enroulements de bobine (16) à contacter.

6. Stator pour moteur à courant continu à commutation électronique selon l'une quelconque des revendications précédentes, **caractérisé en ce que** les corps de connexion (32, 36, 40) sont pourvus de languettes (58) auxquelles les extrémités des enroulements (18) à contacter sont montées de manière électriquement conductrice.

7. Stator pour moteur à courant continu à commutation électronique selon l'une des revendications 5 et 6, **caractérisé en ce que** les fenêtres de passage (56) sont formées directement radialement en dehors des languettes (58).

8. Stator pour moteur à courant continu à commutation électronique selon l'une des revendications 6 ou 7, **caractérisé en ce que** la fixation des extrémités des enroulements (18) avec les languettes (58) des corps de connexion (32, 36, 40) est réalisée par une connexion brasée ou soudée.

9. Stator pour moteur à courant continu à commutation électronique selon l'une quelconque des revendications précédentes, **caractérisé en ce que** les corps isolants (34, 38) sont formés avec des contours (44, 48) qui engagent dans des contours (42, 46) correspondants formés sur le corps de guidage (22).

10. Stator pour moteur à courant continu à commutation électronique selon l'une quelconque des revendications précédentes, **caractérisé en ce que** des bornes (60) s'étendent axialement de chaque corps de connexion (32, 36, 40) dans la direction opposée au paquet de stator (10), bornes par lesquelles les enroulements de bobine (16) sont reliés au circuit électronique par les extrémités des enroulements (18).

11. Stator pour moteur à courant continu à commutation électronique selon la revendication 10, **caractérisé en ce qu'**un anneau terminal (62) est disposé sur le corps de guidage (22), les corps isolants (34, 38) et les corps de connexion (32, 36, 40), ledit anneau présentant des ouvertures de passage (64) à travers les bornes (60) saillent.
